# EUROPEAN PATENT APPLICATION

(11) **EP 4 525 001 A1**
(43) Date of publication of application: **19.03.2025**
(21) Application number: 23803544.8
(22) Date of filing: 08.05.2023
(51) Int. Cl.: H01B 13/00, C01B 25/14, H01M 10/052, H01M 10/0562

(54) **SULFIDE-BASED SOLID ELECTROLYTE POWDER PRODUCTION METHOD AND PRODUCTION DEVICE**

(30) Priority: 13.05.2022 JP 2022079717
(71) Applicant: AGC INC., Chiyoda-ku, Tokyo 1008405 (JP)
(72) Inventor: OMORI Norifumi, Tokyo 100-8405 (JP); MIYASAKA Satoshi, Tokyo 100-8405 (JP)
(74) Representative: Müller-Boré & Partner Patentanwälte PartG mbB
(86) International application number: PCT/JP2023/017337
(87) International publication number: WO 2023/219067

(57) **Abstract**

The present invention relates to a method for producing a sulfide-based solid electrolyte powder, in which: a sulfide-based solid electrolyte raw material is heated and melted in a furnace; and while the obtained melt is discharged from the furnace, the melt is sprayed with a gas to cause the melt to cool, solidify, and undergo powderization.

## Description

### TECHNICAL FIELD

The present invention relates to a method for producing a sulfide-based solid electrolyte powder and an apparatus for producing the same.

### BACKGROUND ART

Lithium-ion secondary batteries are widely used for a portable electronic device such as a mobile phone and a notebook computer. In the related art, a liquid electrolyte has been used in a lithium-ion secondary battery. On the other hand, attention has been paid to an all-solid-state lithium-ion secondary battery in which a solid electrolyte is used as an electrolyte of a lithium-ion secondary battery in recent years, from the viewpoint of improving safety, charging and discharging at a high speed, and reducing the size of a case.

Examples of the solid electrolyte used in the all-solid-state lithium-ion secondary battery include a sulfide-based solid electrolyte powder.

In synthesizing the sulfide-based solid electrolyte powder, it is necessary to perform cooling and solidification after a sulfide-based solid electrolyte raw material is heated and melted to synthesize the powder.

For example, Patent Literature 1 discloses a method for producing solid electrolyte glass by melting and cooling a compressed raw material.

Patent Literature 2 describes a method for synthesizing an electron and lithium ion mixed conductor by mixing a plurality of sulfides and transition metal sulfides, heating and melting a mixture, and then rapidly cooling the melt.

### CITATION LIST

### PATENT LITERATURE

Patent Literature 1: JP5640665B
Patent Literature 2: JP4399903B

### SUMMARY OF INVENTION

### TECHNICAL PROBLEM

However, in the methods of Patent Literatures 1 and 2, when the melt is cooled and solidified, the melt comes into contact with various members, and thus there is a risk of contamination with impurities due to the contact, and a sulfide-based solid electrolyte powder having high purity and desired composition cannot be obtained. Therefore, ionic conduction of the obtained sulfide-based solid electrolyte powder is inhibited, which may result in a decrease in battery performance. Further, in order to obtain a powdered sulfide-based solid electrolyte, it is necessary to perform a pulverization step after a cooling step, which makes a production step complicated and time-consuming.

In view of the above circumstances, an object of the present invention is to provide a method for easily producing a sulfide-based solid electrolyte powder having excellent battery performance by preventing contamination of impurities due to contact with a member, in cooling and solidifying a melt obtained by heating and melting a sulfide-based solid electrolyte raw material, and an apparatus for producing the same.

### SOLUTION TO PROBLEM

As a result of intensive studies, the present inventors have found that, by heating and melting a sulfide-based solid electrolyte raw material in a furnace and spraying a gas while discharging an obtained melt from the furnace, cooling and solidifying of the melt can be performed without coming into contact with a member, and thus contamination of impurities is prevented. Further, according to this method, since powderization can be carried out simultaneously with cooling and solidifying the melt, it is not necessary to carry out a powderization step in addition to a cooling and solidifying step. Accordingly, the present inventors have found that a sulfide-based solid electrolyte powder having excellent battery performance can be easily produced, and have completed the present invention.

That is, the present invention relates to the following [1] to [18].
[1] A method for producing a sulfide-based solid electrolyte powder, the method including:
   heating and melting a sulfide-based solid electrolyte raw material in a furnace; and
   spraying a gas onto an obtained melt while discharging the melt from the furnace to cool, solidify, and powder the melt.
[2] The method for producing a sulfide-based solid electrolyte powder according to the [1], in which a spraying pressure of the gas is 0.2 MPa to 10 MPa.
[3] The method for producing a sulfide-based solid electrolyte powder according to the [1] or [2], in which after the gas is sprayed onto the melt, the sulfide-based solid electrolyte powder is collected in a sealed chamber without being exposed to an atmosphere.
[4] The method for producing a sulfide-based solid electrolyte powder according to the [1] or [2], in which a dew point of the gas is less than -30°C.
[5] The method for producing a sulfide-based solid electrolyte powder according to the [1] or [2], in which an oxygen concentration of the gas is less than 100 ppm by volume.
[6] The method for producing a sulfide-based solid electrolyte powder according to the [1] or [2], in which the sulfide-based solid electrolyte raw material is heated and melted at 600°C or higher and lower than 900°C.
[7] The method for producing a sulfide-based solid electrolyte powder according to the [1] or [2], in which the sulfide-based solid electrolyte raw material is heated and melted in a gas atmosphere containing a sulfur element.
[8] The method for producing a sulfide-based solid electrolyte powder according to the [7], in which the gas atmosphere containing the sulfur element is obtained by supplying a sulfur source to the sulfide-based solid electrolyte raw material or the melt.
[9] The method for producing a sulfide-based solid electrolyte powder according to the [7], in which the gas atmosphere containing the sulfur element is obtained by introducing a sulfur vapor into the furnace.
[10] The method for producing a sulfide-based solid electrolyte powder according to the [1] or [2], the method including continuously supplying the sulfide-based solid electrolyte raw material to the furnace and continuously discharging the melt from the furnace.
[11] The method for producing a sulfide-based solid electrolyte powder according to the [1] or [2], in which the sulfide-based solid electrolyte powder contains a sulfur element and a halogen element.
[12] An apparatus for producing a sulfide-based solid electrolyte powder, the apparatus including:
   a furnace;
   a heating portion configured to heat the furnace;
   a discharge portion configured to discharge, from the furnace, a melt obtained by heating and melting a sulfide-based solid electrolyte raw material in the furnace; and
   a gas spraying portion configured to spray a gas to the melt discharged from the discharge portion to perform cooling, solidification, and powderization.
[13] The apparatus for producing a sulfide-based solid electrolyte powder according to the [12], the apparatus further including a sealed chamber, in which the gas spraying portion is provided in the sealed chamber.
[14] The apparatus for producing a sulfide-based solid electrolyte powder according to the [12] or [13], the apparatus including a sulfur supply portion configured to supply a sulfur source or a sulfur vapor to the furnace.
[15] The apparatus for producing a sulfide-based solid electrolyte powder according to the [12] or [13], the apparatus including a raw material supply portion configured to supply the sulfide-based solid electrolyte raw material to the furnace, in which the raw material supply portion continuously supplies the sulfide-based solid electrolyte raw material into the furnace.
[16] The apparatus for producing a sulfide-based solid electrolyte powder according to the [12] or [13], the apparatus including a raw material supply portion configured to supply the sulfide-based solid electrolyte raw material to the furnace, in which the raw material supply portion quantitatively supplies the sulfide-based solid electrolyte raw material into the furnace.
[17] The apparatus for producing a sulfide-based solid electrolyte powder according to the [12] or [13], in which the discharge portion continuously discharges the melt obtained by heating and melting the sulfide-based solid electrolyte raw material in the furnace.
[18] The apparatus for producing a sulfide-based solid electrolyte powder according to the [12] or [13], the apparatus including a reheating portion configured to reheat the sulfide-based solid electrolyte powder obtained by being cooled in the gas spraying portion.

### ADVANTAGEOUS EFFECTS OF INVENTION

According to the present invention, a sulfide-based solid electrolyte raw material is heated and melted in a furnace, and an obtained melt is sprayed with a gas while being discharged from the furnace, so that the melt can be cooled, solidified, and powdered in one go without coming into contact with a member. Therefore, contamination of impurities caused by contact with the member can be prevented, and a sulfide-based solid electrolyte powder having excellent battery performance can be easily produced.

### BRIEF DESCRIPTION OF DRAWINGS

FIG. 1 is a flowchart of a method for producing a sulfide-based solid electrolyte powder according to an embodiment of the present invention.
FIG. 2 is a schematic view showing an example of the method for producing a sulfide-based solid electrolyte powder according to the embodiment of the present invention.
FIG. 3 is a schematic view showing an example of an apparatus for producing a sulfide-based solid electrolyte powder according to an embodiment of the present invention.

### DESCRIPTION OF EMBODIMENTS

Hereinafter, the present invention is described in detail, but the present invention is not limited to the following embodiments, and can be freely modified and implemented without departing from the gist of the present invention. In addition, "to" indicating a numerical range is used to include numerical values written before and after it as a lower limit value and an upper limit value. In the following drawings, members and portions having the same functions may be denoted by the same reference numerals, and duplicate descriptions may be omitted or simplified. In addition, embodiments described in the drawings are schematically for the purpose of clearly illustrating the present invention, and do not necessarily accurately represent a size or a scale of an actual apparatus.

### <Method for Producing Sulfide-based Solid Electrolyte Powder>

A method for producing a sulfide-based solid electrolyte powder according to an embodiment of the present invention (hereinafter also referred to as the present production method) includes: heating and melting a sulfide-based solid electrolyte raw material in a furnace; and spraying a gas onto an obtained melt while discharging the melt from the furnace to cool, solidify, and powder the melt.

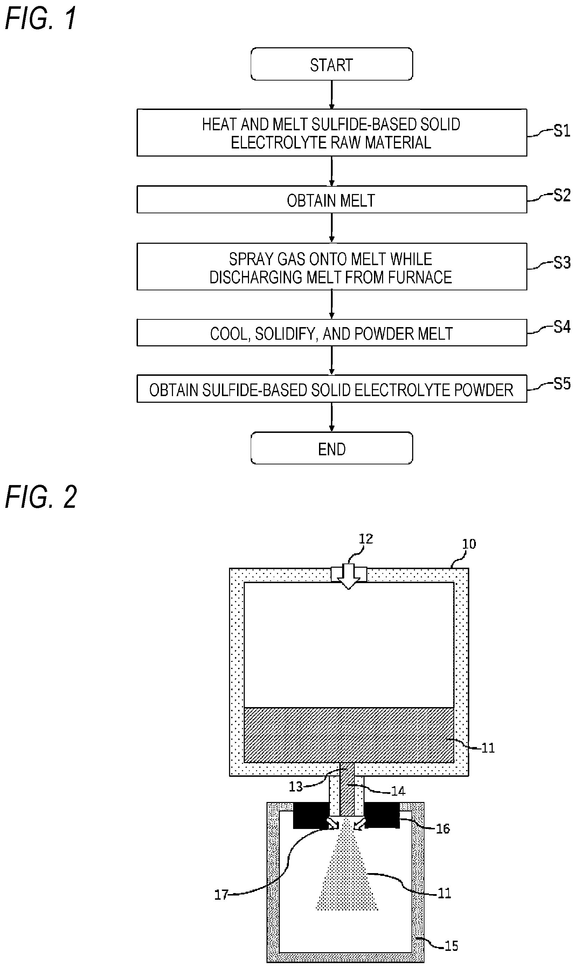

FIG. 1 shows a flowchart of the present production method.

In the present production method, first, the sulfide-based solid electrolyte raw material is heated and melted in the furnace (step S1) to obtain the melt (step S2).

As the furnace, a known furnace which includes a heating portion and is used for heating and melting a solid electrolyte raw material in the related art can be appropriately used, and a material and a size of the furnace can be freely selected.

### (Sulfide-based Solid Electrolyte Raw Material)

In the present production method, various raw materials can be used as the sulfide-based solid electrolyte raw material (hereinafter, sometimes referred to as the present raw material), and the sulfide-based solid electrolyte powder obtained using these raw materials may also be various sulfide-based solid electrolyte powders.

As the present raw material, a commercially available sulfide-based solid electrolyte raw material may be used, or a sulfide-based solid electrolyte raw material produced from a material may be used. In addition, these sulfide-based solid electrolyte raw materials may be further subjected to a known pretreatment. That is, the present production method may appropriately include a step of producing the present raw material or a step of subjecting the present raw material to a pretreatment.

The sulfide-based solid electrolyte raw material is specifically described below. The sulfide-based solid electrolyte raw material usually contains an alkali metal element (R) and a sulfur element (S).

Examples of the alkali metal element (R) include lithium element (Li), sodium element (Na), and potassium element (K), and among these elements, the lithium element (Li) is preferable.

As the alkali metal element (R), substances (components) containing an alkali metal element such as elemental alkali metal element and compounds containing an alkali metal element can be appropriately combined and used. Here, as the lithium element, Li-containing substances (components), such as elemental Li and Li-containing compounds, can be appropriately combined and used.

Examples of a substance containing the lithium element (Li) include lithium compounds such as lithium sulfide (Li₂S), lithium iodide (LiI), lithium carbonate (Li₂CO₃), lithium sulfate (Li₂SO₄), lithium oxide (Li₂O), and lithium hydroxide (LiOH), and metallic lithium. As the substance containing the lithium element (Li), from the viewpoint of obtaining a sulfide material, it is preferable to use lithium sulfide.

As the sulfur element (S), S-containing substances (components), such as elemental S and S-containing compounds, can be appropriately combined and used.

Examples of a substance containing the sulfur element (S) include phosphorus sulfides such as phosphorus trisulfide (P₂S₃) and phosphorus pentasulfide (P₂S₅), other sulfur compounds containing phosphorus, elemental sulfur, and a compound containing sulfur. Examples of the compound containing sulfur include H₂S, CS₂, iron sulfides (FeS, Fe₂S₃, FeS₂, Fe₁₋ₓS, or the like), bismuth sulfide (Bi₂S₃), and copper sulfides (CuS, Cu₂S, Cu₁₋ₓS, or the like). From the viewpoint of obtaining a sulfide material, the substance containing the sulfur element (S) is preferably phosphorus sulfide, and more preferably phosphorus pentasulfide (P₂S₅). These substances may be used alone or in combination of two or more kinds thereof. Phosphorus sulfide can be considered as a compound that serves as both the S-containing substance and a P-containing substance, which is described later.

From the viewpoint of improving an ionic conductivity and the like of the obtained sulfide-based solid electrolyte powder, it is preferable that the present raw material further contains the phosphorus element (P). As the phosphorus element (P), P-containing substances (components), such as elemental P and P-containing compounds, can be appropriately combined and used.

Examples of a substance containing the phosphorus element (P) include phosphorus sulfides such as phosphorus trisulfide (P₂S₃) and phosphorus pentasulfide (P₂S₅), phosphorus compounds such as sodium phosphate (Na₃PO₄), and elemental phosphorus. As the substance containing the phosphorus element (P), from the viewpoint of exerting the effect of the present invention more effectively, phosphorus sulfide having high volatility is preferable, and phosphorus pentasulfide (P₂S₅) is more preferable. These substances may be used alone or in combination of two or more kinds thereof.

The present raw material may be obtained as a mixed raw material by, for example, appropriately mixing the above-mentioned substances according to a composition of the desired sulfide-based solid electrolyte powder. A mixing ratio is not particularly limited, but for example, a molar ratio S/R of the sulfur element (S) to the alkali metal element (R) in the present raw material is preferably 0.65/0.35 or less, and more preferably 0.5/0.5 or less, from the viewpoint of improving the ionic conductivity and the like of the obtained sulfide-based solid electrolyte powder. The mixed raw material is preferably obtained by mixing the raw materials in a predetermined stoichiometric mixture ratio according to the materials used for the mixing. Examples of a mixing method include mixing in a mortar, mixing using a medium such as a planetary ball mill, and medium-less mixing such as a pin mill, a powder stirrer, and air flow mixing.

Examples of a preferred combination of the alkali metal element and the sulfur element contained in the present raw material include a combination of Li₂S and P₂S₅. When Li₂S and P₂S₅ are combined, a molar ratio Li/P of Li to P is preferably from 40/60 or more, and more preferably from 50/50 or more. The molar ratio Li/P of Li to P, is preferably 88/12 or less. Further, a molar ratio Li/P of Li to P is preferably from 40/60 to 88/12, and more preferably from 50/50 to 88/12. By adjusting the mixing ratio so that the amount of P₂S₅ is relatively smaller than Li₂S, it becomes easier to prevent volatilization of sulfur and phosphorus components during a heating treatment due to a smaller boiling point of P₂S₅ compared to a melting point of Li₂S.

On the other hand, since lithium sulfide is expensive, a lithium compound other than lithium sulfide, metallic lithium, or the like may be used from the viewpoint of reducing a production cost of the sulfide-based solid electrolyte powder. Specifically, in this case, the present raw material preferably contains one or more selected from the group consisting of metallic lithium, lithium iodide (LiI), lithium carbonate (Li₂CO₃), lithium sulfate (Li₂SO₄), lithium oxide (Li₂O), and lithium hydroxide (LiOH) as the Li-containing substance. These substances may be used alone or in combination of two or more kinds thereof.

The present raw material may contain further substances (compounds and the like) in addition to the above substances depending on the composition of the desired sulfide-based solid electrolyte powder or as additives or the like.

For example, when producing a sulfide-based solid electrolyte powder containing a halogen element such as F, Cl, Br or I, the present raw material preferably contains a halogen element (Ha). In this case, the present raw material preferably contains a compound containing a halogen element. Examples of the compound containing a halogen element include lithium halides such as lithium fluoride (LiF), lithium chloride (LiCl), lithium bromide (LiBr), and lithium iodide (LiI), phosphorus halides, phosphoryl halides, sulfur halides, sodium halides, and boron halides. As the compound containing a halogen element, lithium halides are preferable, and LiCl, LiBr, and LiI are more preferable, from the viewpoint of reactivity of the raw material. These compounds may be used alone or in combination of two or more kinds thereof.

An alkali metal halide such as lithium halide is also a compound containing an alkali metal element such as Li. When the present raw material contains an alkali metal halide, a part or all of the alkali metal element such as Li in the present raw material may be derived from the alkali metal halide such as lithium halide.

When the present raw material contains the halogen element (Ha) and the phosphorus element (P), a molar equivalent of Ha relative to P in the present raw material is preferably 0.2 molar equivalents or more, and more preferably 0.5 molar equivalents or more, from the viewpoint of improving the ionic conductivity and the like of the obtained sulfide-based solid electrolyte powder. From the viewpoint of stability of the obtained sulfide-based solid electrolyte powder, the molar equivalent of Ha is preferably 4 molar equivalents or less, and more preferably 3 molar equivalents or less.

As is described later, in a case in which the present raw material contains the sulfur element (S) or the halogen element (Ha), when the melt is brought into contact with a cooling member and rapidly cooled, the sulfur element (S) is required to have oxidation resistance, whereas the halogen element (Ha) is required to have reduction resistance. Since the required properties of the two are different, it is difficult to select a corrosion resistant member that can achieve the both. However, in the present production method, the melt is cooled and solidified by being sprayed with the gas, so the above problems do not occur. Therefore, from the viewpoint of exhibiting the effect of the present invention, the present raw material preferably contains the sulfur element (S) and the halogen element (Ha).

The obtained sulfide-based solid electrolyte powder may be an amorphous sulfide-based solid electrolyte powder depending on a purpose, and from the viewpoint of improving ease of generation of an amorphous phase, it is also preferable that the present raw material contains sulfides such as SiS₂, B₂S₃, GeS₂, and Al₂S₃. By facilitating the generation of the amorphous phase, when the amorphous substance is obtained by rapid cooling, the amorphous sulfide-based solid electrolyte powder can be obtained even when a cooling rate is reduced, thereby reducing a load on an apparatus.

From the viewpoint of imparting moisture resistance to the sulfide-based solid electrolyte powder, it is also preferable that oxides such as SiO₂, B₂O₃, GeO₂, Al₂O₃, P₂O₅ are contained. These compounds may be used alone or in combination of two or more kinds thereof.

The sulfides and oxides may be contained in the present raw material, or may be added separately when the present raw material is heated and melted. An addition amount of the sulfides and oxides is preferably 0.1 weight% or more, and more preferably 0.5 weight% or more with respect to a total amount of the raw material. The addition amount is preferably 50 weight% or less, and more preferably 40 weight% or less.

The present raw material may also contain a compound that serves as a crystal nucleus, which is described later.

Since the present production method can prevent volatilization of the raw material as described above, the present production method is particularly preferably used when the present raw material contains a highly volatile compound. Examples of a highly volatile compound include LiI, B₂S₃, S, Se, Sb₂S₃, and P₂S₅.

### (Heating and Melting)

In the present production method, as shown in FIG. 2, first, a sulfide-based solid electrolyte raw material 12 introduced into a furnace 10 is heated and melted to obtain a melt 11. The furnace 10 includes a heating portion (not shown) and is heated to a temperature at which the sulfide-based solid electrolyte raw material 12 is melted.

When the sulfide-based solid electrolyte raw material 12 is continuously supplied into the furnace 10, it is preferable to supply the sulfide-based solid electrolyte raw material 12 quantitatively. The method for the above-mentioned quantitative supply is not particularly limited, but examples thereof include methods using a screw feeder, a table feeder, and gas flow conveyance.

The heating and melting of the sulfide-based solid electrolyte raw material is preferably performed in a gas atmosphere containing a sulfur element. The present raw material is heated and melted in the gas atmosphere containing the sulfur element, whereby sulfur is introduced into the melt. Accordingly, since the volatilization of sulfur during the heating can be prevented, the composition of the obtained sulfide-based solid electrolyte powder can be appropriately controlled. The gas containing the sulfur element is, for example, a gas containing a compound containing the sulfur element or elemental sulfur, such as a sulfur gas, a hydrogen sulfide gas, and a carbon disulfide gas.

The gas atmosphere containing sulfur element may be obtained by supplying a sulfur source to the sulfide-based solid electrolyte raw material or the melt and heating the sulfur source to generate a gas containing a sulfur element. By supplying the sulfur source to the sulfide-based solid electrolyte raw material, the sulfur source is also heated when the sulfide-based solid electrolyte raw material is heated and melted, so that the sulfide-based solid electrolyte raw material can be heated and melted in the gas atmosphere containing the generated sulfur element. Further, by supplying the sulfur source to the melt, the sulfide-based solid electrolyte raw material can be heated and melted in the gas atmosphere containing the generated sulfur element.

The sulfur source is not particularly limited as long as the sulfur source is elemental sulfur or a sulfur compound, and examples thereof include elemental sulfur, organic sulfur compounds such as hydrogen sulfide and carbon disulfide, iron sulfides (such as FeS, Fe₂S₃, FeS₂, and Fe₁₋ₓS), bismuth sulfide (Bi₂S₃), copper sulfides (such as CuS, Cu₂S, and Cu₁₋ₓS), polysulfides such as lithium polysulfide and sodium polysulfide, polysulfides, and rubber subjected to a sulfur vulcanization treatment. The sulfur source is preferably a sulfur powder.

As another method, the gas atmosphere containing the sulfur element may be obtained by introducing a sulfur vapor obtained in advance into the furnace. For example, sulfur is heated at 200°C to 450°C to generate the sulfur vapor, and an inert gas such as a N₂ gas, an argon gas, or a helium gas is transported into the furnace as a carrier gas to obtain the gas atmosphere containing the sulfur element.

A temperature for heating and melting is not particularly limited, but from the viewpoint of homogenizing the melt in a short time, the temperature is preferably 600°C or higher, more preferably 630°C or higher, and still more preferably 650°C or higher. Further, the temperature for heating and melting is preferably 1,000°C or lower, more preferably 950°C or lower, still more preferably lower than 900°C, and particularly preferably lower than 800°C, from the viewpoint of preventing deterioration or decomposition due to heating of the components in the melt. Further, the temperature is preferably 600°C or higher and lower than 900°C.

In the case of heating to the above temperature, heating to the above temperature may be performed by the heating portion provided in the furnace, but thereafter, it is sufficient to compensate for a decrease in temperature during the heating and melting step with heat energy. For example, the above temperature may be maintained by maintaining an internal temperature with a heater or the like.

A time for heating and melting to obtain the melt is not particularly limited as long as the melt surface is obtained, but may be, for example, 0.5 hours or more, 1 hour or more, or 2 hours or more. As long as the deterioration and decomposition of the components in the melt caused by the heating is tolerable, the time for heating and melting may be long. As a practical range, the time is preferably 100 hours or less, more preferably 50 hours or less, and still more preferably 25 hours or less.

A pressure during the heating and melting is not particularly limited, but for example, a normal pressure or a slight pressure is preferred, and normal pressure is more preferred.

From the viewpoint of preventing side reactions with water vapor, oxygen, and the like during heating and melting, a dew point in the furnace is preferably -20°C or lower. The lower limit is not particularly limited, and is generally -80°C or more. Further, an oxygen concentration is preferably 1,000 ppm by volume or less.

### (Cooling, Solidifying, and Powdering by Spraying Gas)

In the present production method, following the heating and melting, as shown in FIG. 1, the melt of the present raw material obtained above is sprayed with a gas while being discharged from the furnace (step S3) to cool, solidify, and powder the melt (step S4), thereby obtaining a sulfide-based solid electrolyte powder (step S5).

Specifically, first, as shown in FIG. 2, the melt 11 is discharged at any timing from a discharge portion 13 provided in the furnace 10, and the melt 11 is transferred to a step of being cooled, solidified, and powdered.

In one aspect of the present production method, for example, the melt 11 discharged from the discharge portion 13 of the furnace 10 passes through a melt outlet portion 14 and is discharged into a sealed chamber 15. Before the melt 11 is discharged and falls into the sealed chamber 15, a gas 17 is sprayed from a gas spraying portion 16 provided in the sealed chamber 15 to the discharged melt 11. Accordingly, the melt 11 is cooled, solidified, and powdered.

As described above, in the present production method, the melt obtained in the furnace is sprayed with the gas, so that the melt can be cooled, solidified, and powdered. Since the cooling and solidification is performed by spraying the gas, there is no contact with members during the cooling, which reduces contamination with impurities and results in a sulfide-based solid electrolyte powder having excellent battery performance.

In particular, in the case of producing the sulfide-based solid electrolyte powder containing the sulfur element (S) and the halogen element (Ha), in general, when the melt of the raw material is cooled and solidified, rapid cooling is preferably performed from the viewpoint of preventing desorption and decomposition of electrolyte components and achieving a desired crystal structure, but if the melt comes into contact with the members while the temperature is high during the rapid cooling, a reaction occurs at an interface. In addition, when the melt comes into contact with the members and rapidly cooled, the sulfur element (S) is required to have oxidation resistance, while the halogen element (Ha) is required to have reduction resistance. Since the required properties of the two are different, it is difficult to select a corrosion resistant member that can achieve the both. Therefore, it is preferable to rapidly cool the melt by a method in which the melt does not come into contact with the members, but it is difficult to rapidly cool the melt because of a large heat capacity. However, according to the present production method, by spraying the gas onto the melt, the melt is powdered, the heat capacity is reduced, and non-contact rapid cooling is possible, so the above problems do not occur.

In the present production method, since no interfacial reaction occurs at a contact portion of the member, there are no restrictions on the members that can be used, increasing the freedom of member selection.

According to the gas spraying method, since powderization can be carried out simultaneously with cooling and solidifying the melt, it is not necessary to carry out a separate powderization step in addition to a cooling and solidifying step. Furthermore, since a small-diameter powder can be obtained by spraying the gas and cooling, the rapid cooling can be achieved. Therefore, a cooling time is shortened, a production volume increases, and a quality is also improved due to the rapid cooling. As described above, according to the gas spraying method, it is possible to easily produce a high-quality sulfide-based solid electrolyte powder without going through complicated steps.

Examples of the gas spraying method include a gas atomizing method.

As the gas, it is preferable to use an inert gas such as nitrogen or argon.

A spraying pressure of the gas pressure is preferably 0.2 MPa or more, more preferably 0.5 MPa or more, and still more preferably 0.8 MPa or more from the viewpoint of reducing a powder grain size and decreasing a heat capacity per powder. Further, an upper limit of the gas spraying pressure is not specifically limited, and is preferably 10 MPa or less, more preferably 9.5 MPa or less, and still more preferably 9 MPa or less, from the viewpoint of continuous operation stability and practical gas spraying cost. Furthermore, the spraying pressure of the gas pressure is preferably 0.2 MPa to 10 MPa, more preferably 0.5 MPa to 9.5 MPa, and still more preferably 0.8 MPa to 9 MPa.

A gas velocity is not particularly limited, and may be, for example, 300m/s or more, 350m/s or more, or 400m/s or more.

An oxygen concentration of the above gas may be adjusted as necessary. The oxygen concentration of the gas is preferably less than 100 ppm by volume, more preferably less than 10 ppm by volume, and still more preferably less than 1 ppm by volume. Further, the dew point of the gas is preferably less than -30°C, more preferably less than -40°C, and still more preferably less than -50°C, as the dew point under atmospheric pressure.

The gas spraying onto the melt is preferably carried out in a sealed chamber without exposing the melt to the atmosphere, and the obtained sulfide-based solid electrolyte powder is preferably collected. Accordingly, it is possible to prevent a quality of the solid electrolyte powder from deteriorating due to the reaction of components in the atmosphere, particularly oxygen and moisture. Here, the sealed chamber means a chamber an inside of which is isolated from the atmosphere, such as a vacuum chamber or a chamber that seals a gas.

The dew point in the sealed chamber is preferably less than -30°C, more preferably less than -40°C, and still more preferably less than -50°C. When the dew point in the sealed chamber is less than -30°C, a state of the interface can be maintained normally, and deterioration of the battery performance can be prevented. Further, a lower limit of the dew point in the sealed chamber is not particularly limited as long as the dew point is within a practical range, but may be, for example, -80°C or higher.

From the viewpoint of maintaining the quality of the solid electrolyte powder and preventing the deterioration of the battery performance, the oxygen concentration in the sealed chamber is preferably less than 100 ppm by volume, more preferably less than 10 ppm by volume, and still more preferably less than 1 ppm by volume. A lower limit of the oxygen concentration is not specifically limited, but may be 0.01 ppm by volume or more from the viewpoint of a practical operating cost.

When the cooling, solidification, and powderization of the melt, which are performed by the gas spraying, is interrupted, the gas 17 may be sprayed near an outlet of the melt outlet portion 14 on the sealed chamber 15 side to cool and solidify the melt 11 discharged into the sealed chamber 15, thereby sealing the outlet and stopping an outflow of the melt 11. Further, when the cooling, solidification and powderization of the melt are resumed by the gas spraying, the vicinity of the outlet may be heated with a heater or the like, and the seal around the outlet may be released to resume the outflow of the melt 11.

### (Reheating Treatment)

When the solid obtained in the cooling step is an amorphous sulfide-based solid electrolyte powder or a sulfide-based solid electrolyte powder containing an amorphous phase, the present production method may further include a step of reheating the powder. Further, by reheating the sulfide-based solid electrolyte powder containing a sulfide-based solid electrolyte crystal, ions in the crystal structure can be re-arranged, thereby increasing lithium-ion conductivity. The reheating treatment refers to at least one of heating the powder obtained by cooling for crystallization and re-arranging ions in the crystal structure.

### (Pulverizing)

The obtained sulfide-based solid electrolyte powder may be further pulverized to further reduce a particle size of the powder. A pulverization method may be, for example, a wet pulverization method.

In the case of the wet pulverization method, a type of used solvent is not particularly limited, but since the sulfide-based solid electrolyte has a tendency to react with moisture and deteriorate, it is preferable to use a non-aqueous organic solvent.

A type of the non-aqueous organic solvent is not particularly limited, and examples thereof include a hydrocarbon-based solvent, an organic solvent containing a hydroxy group, an organic solvent containing an ether group, an organic solvent containing a carbonyl group, an organic solvent containing an ester group, an organic solvent containing an amino group, an organic solvent containing a formyl group, an organic solvent containing a carboxy group, an organic solvent containing an amide group, an organic solvent containing a benzene ring, an organic solvent containing a mercapto group, an organic solvent containing a thioether group, an organic solvent containing a thioester group, an organic solvent containing a disulfide group, and a halogenated alkyl.

Examples of the hydrocarbon-based solvent include cyclohexane, heptane, octane, and toluene, and cyclohexane, heptane, and octane are preferred from the viewpoint of a low saturated moisture concentration. Further, from the viewpoint of adjusting the moisture concentration, it is also preferable to use a mixed solvent in which these hydrocarbon-based solvents are mixed with toluene, dibutyl ether, or the like.

From the viewpoint of preventing a decrease in lithium-ion conductivity due to the sulfide-based solid electrolyte powder reacting with water during pulverization of the sulfide-based solid electrolyte powder, it is preferable that the moisture concentration of the non-aqueous organic solvent is low. The moisture concentration of the non-aqueous organic solvent may be, for example, 170 ppm by mass or less, 150 ppm by mass or less, 120 ppm by mass or less, or 100 ppm by mass or less.

The wet pulverization method may be carried out using a pulverizer such as a ball mill, a planetary ball mill, or a bead mill.

In the wet pulverization, in addition to the above-mentioned solvent, an ether compound, an ester compound, or a nitrile compound may be added as an additive (dispersant).

When the solvent or the additive remains in the sulfide-based solid electrolyte powder obtained through the wet pulverization, a drying step may be carried out. A drying condition may be, for example, a temperature of 100°C or higher and 200°C or lower. A drying time is not particularly limited and may be, for example, 10 minutes or more and 24 hours or less. Further, the drying step may be carried out under a reduced pressure, for example an absolute pressure of 50 kPa or less. The drying step can be carried out using a hot plate, a drying oven, an electric oven, or the like.

### (Continuous Process)

In the present production method, the above-mentioned heating and melting step and the above-mentioned step of cooling, solidifying and powdering by the gas spraying are preferably carried out as a continuous process. That is, it is preferable to continuously supply the sulfide-based solid electrolyte raw material into the furnace, continuously discharge the melt obtained by the heating and melting, and transfer the melt to a step of cooling, solidifying, and powdering by the gas spraying, thereby continuously producing the sulfide-based solid electrolyte powder. Accordingly, a series of steps of charging the raw material, discharging the melt, and cooling, solidifying, and powdering the melt can be continuously performed, and the sulfide-based solid electrolyte powder can be more efficiently produced in a short time. Specifically, it is preferable to continuously carry out a series of steps including a step of heating and melting the sulfide-based solid electrolyte raw material in the furnace to obtain the melt, and a step of discharging the melt from the furnace and cooling, solidifying, and powdering the melt by the gas spraying.

### (Sulfide-based Solid Electrolyte Powder)

The sulfide-based solid electrolyte powder obtained by the present production method includes a sulfide-based solid electrolyte powder containing a lithium element.

As described above, in the case where the sulfide-based solid electrolyte powder contains the sulfur element (S) and the halogen element (Ha), when the melt is brought into contact with the cooling member and rapidly cooled in the present production method, the sulfur element (S) is required to have the oxidation resistance, whereas the halogen element (Ha) is required to have the reduction resistance. Since the required properties of the two are different, it is difficult to select the corrosion resistant member that can achieve the both. However, according to the present production method, the melt is cooled and solidified by spraying the gas onto the melt, so the above problems do not occur. Therefore, from the viewpoint of exhibiting the effect of the present invention, the sulfide-based solid electrolyte powder obtained by the present production method preferably contains the sulfur element (S) and the halogen element (Ha).

Examples of the sulfide-based solid electrolyte powder obtained by the present production method include a sulfide-based solid electrolyte powder having an LGPS crystal structure such as Li_{1O}GeP₂S₁₂, a sulfide-based solid electrolyte powder having an argyrodite crystal structure such as Li₆PS₅Cl, Li_{5.4}PS_{4.4}Cl_{1.6}, and Li_{5.4}PS_{4.4}Cl_{0.8}Br_{0.8}, Li-P-S-Ha-based (Ha represents at least one element selected from the halogen elements) crystallized glass; and LPS crystallized glass such as Li₇P₃S₁₁.

Depending on the purpose, the sulfide-based solid electrolyte powder may be an amorphous sulfide-based solid electrolyte powder, a sulfide-based solid electrolyte powder having a specific crystal structure, or a sulfide-based solid electrolyte powder including a crystal phase and an amorphous phase. The crystal phase is more preferably an argyrodite crystal phase from the viewpoint of lithium-ion conductivity.

As a sulfide-based solid electrolyte powder having excellent lithium-ion conductivity, a sulfide-based solid electrolyte powder having elements of Li-P-S-Ha is preferable, and it is more preferable that the sulfide-based solid electrolyte powder has a crystal phase. In the halogen element, the halogen element is preferably derived from one or more selected from the group consisting of lithium chloride, lithium bromide, and lithium iodide.

The lithium-ion conductivity of the sulfide-based solid electrolyte powder is preferably 1.0 × 10⁻⁴ S/cm or more, more preferably 5.0 × 10⁻⁴ S/cm or more, still more preferably 1.0 × 10⁻³ S/cm or more, and particularly preferably 5.0 × 10⁻³ S/cm or more from the viewpoint of improving the battery characteristics when used in a lithium-ion secondary battery.

The lithium-ion conductivity is measured using an AC impedance measuring device (for example, potentiostat/galvanostat VSP, manufactured by Bio-Logic Sciences Instruments) under the following measurement conditions: measurement frequency: 100 Hz to 1 MHz, measurement voltage: 100 mV, measurement temperature: 25°C.

The obtained sulfide-based solid electrolyte powder can be identified by analyzing the crystal structure by X-ray diffraction (XRD) measurement, and analyzing the elemental composition using various methods such as ICP emission spectrometry, atomic absorption spectrometry, and ion chromatography. For example, P and S can be measured by ICP emission spectrometry, Li can be measured by atomic absorption spectrometry, and Ha can be measured by ion chromatography.

By performing the Raman spectrum measurement, homogeneity of the composition of the sulfide-based solid electrolyte powder can be evaluated. Specifically, samples obtained from the obtained sulfide-based solid electrolyte powder is subjected to the Raman spectrum measurement at any two or more points. From the viewpoint of improving accuracy of the evaluation, the number of measurement points is preferably 8 or more, and more preferably 10 or more.

Preferable conditions for the Raman spectrum measurement when evaluating the homogeneity of the composition of the sulfide-based solid electrolyte powder include, for example, a spot diameter of 3 µm and the number of 10 of the measurement points. By setting the spot diameter to 3 µm, an analysis area in the Raman spectrum measurement becomes a size suitable for evaluating the homogeneity of the composition of the sulfide-based solid electrolyte powder at a micro level.

It is believed that the smaller the variation in the peak wavenumber (peak position) resulting from the structure of the sulfide-based solid electrolyte powder is, such as PS₄³⁻ in each measurement result, the more homogeneous the composition of the sulfide-based solid electrolyte powder is. Alternatively, it is believed that the smaller the variation in the full width at half maximum of the peaks resulting from the structure of the sulfide-based solid electrolyte powder is, the more homogeneous the composition of the sulfide-based solid electrolyte powder is.

It is preferable to confirm peaks derived from a P-S bond as the peaks derived from the structure of the sulfide-based solid electrolyte powder although it depends on the composition of the resulting sulfide-based solid electrolyte powder.

A position of the peak derived from the P-S bond varies depending on the composition system, but typically, the position is between 350 cm⁻¹ and 500 cm⁻¹. Hereinafter, in the present specification, the variation in peak position and the variation in full width at half maximum of the peak refer to those confirmed for the most intense peak among the peaks derived from the P-S bond.

The variation in peak position can be evaluated as follows. That is, when a standard deviation of the peak positions for each measurement point obtained by the Raman spectrum measurement is calculated and the variation in peak position is expressed as (peak position average value) ± (standard deviation), a standard deviation value is preferably within 2 cm⁻¹, more preferably within 1 cm⁻¹, and still more preferably within 0.5 cm⁻¹. Here, the peak position refers to a position of a peak top.

For example, when the sulfide-based solid electrolyte powder obtained by the present production method was subjected to the Raman spectrum measurement with a spot diameter of 3 µm and 10 measurement points, the standard deviation of the peak positions of the peaks derived from the P-S bond in a range of 350 cm⁻¹ to 500 cm⁻¹ for each measurement point is preferably within 2 cm⁻¹, more preferably within 1 cm⁻¹, and still more preferably within 0.5 cm⁻¹.

The variation in full width at half maximum of the peaks can be evaluated as follows. That is, the standard deviation of the full width at half maximum of the peaks for each measurement point obtained by the Raman spectrum measurement is calculated by determining the full width at half maximum of each peak and then calculating a standard deviation of the values. When the variation in full width at half maximum is expressed as (average value of full width at half maximum of peaks) ± (standard deviation), the standard deviation value is preferably within 2 cm⁻¹, and more preferably within 1.5 cm⁻¹. The full width at half maximum of the peaks herein refers to a width at which half the peak intensity of the peaks derived from the P-S bond intersects with the peaks derived from the P-S bond when the Raman spectrum is plotted.

For example, when the sulfide-based solid electrolyte powder obtained by the present production method was subjected to the Raman spectrum measurement with a spot diameter of 3 µm and 10 measurement points, the standard deviation in full width at half maximum of the peaks derived from the P-S bond in a range of 350 cm⁻¹ to 500 cm⁻¹ for each measurement point is preferably within 2 cm⁻¹, and more preferably within 1.5 cm⁻¹.

### <Apparatus for Producing Sulfide-based Solid Electrolyte Powder>

An apparatus for producing a sulfide-based solid electrolyte powder according to an embodiment of the present invention (hereinafter, also referred to as the present production apparatus) includes: a furnace; a heating portion configured to heat the furnace; a discharge portion configured to discharge, from the furnace, a melt obtained by heating and melting a sulfide-based solid electrolyte raw material in the furnace; and a gas spraying portion configured to spray a gas to the melt discharged from the discharge portion to perform cooling, solidification, and powderization.

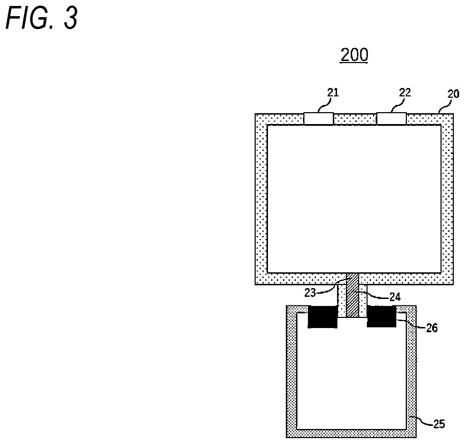

The present production apparatus can be used for performing the present production method described above, and the contents described in the section <Method for Producing Sulfide-based Solid Electrolyte Powder> can be directly applied thereto. FIG. 3 is a schematic diagram showing an example of the present production apparatus.

The heating portion (not shown) that heats a furnace 20 in a present production apparatus 200 is provided for performing the heating and melting described in the section <Method for Producing Sulfide-based Solid Electrolyte Powder>, and an aspect thereof is not particularly limited.

The present production apparatus 200 may include a raw material supply portion 21 that supplies the sulfide-based solid electrolyte raw material to the furnace 20, and an aspect thereof is not particularly limited.

In addition, the raw material supply portion 21 may be a portion that continuously supplies the sulfide-based solid electrolyte raw material into the furnace 20, or a portion that quantitatively supplies the sulfide-based solid electrolyte raw material into the furnace 20, or may be both.

The present production apparatus 200 may include a sulfur supply portion 22 that supplies the sulfur source or the sulfur vapor described in the section <Method for Producing Sulfide-based Solid Electrolyte Powder>, and an aspect thereof is not particularly limited.

In FIG. 3, the raw material supply portion 21 and the sulfur supply portion 22 are shown as an example in which different supply ports are used, but the present embodiment is not limited to this, and the same supply port provided in the present production apparatus 200 may be used.

A discharge portion 23 in the present production apparatus 200 is provided for discharging, from the furnace 20, the melt obtained by heating and melting the sulfide-based solid electrolyte raw material in the furnace 20, and an aspect thereof is not particularly limited.

As described in the section <Method for Producing Sulfide-based Solid Electrolyte Powder>, the discharge portion 23 may continuously discharge the melt obtained by heating and melting the sulfide-based solid electrolyte raw material in the furnace 20.

As described in the section <Method for Producing Sulfide-based Solid Electrolyte Powder>, the present production apparatus 200 may include a melt outlet portion 24 that allows the melt discharged from the discharge portion 23 to flow to the gas spraying portion 26, and an aspect thereof is not particularly limited.

As described in the section <Method for Producing Sulfide-based Solid Electrolyte Powder>, the gas spraying portion 26 in the present production apparatus 200 is provided for spraying the gas onto the melt discharged from the discharge portion 23 to cool, solidify, and powder the melt, and an aspect thereof is not particularly limited.

The gas spraying portion 16 may be provided in a sealed chamber 25 described in the section <Method for Producing Sulfide-based Solid Electrolyte Powder>.

As described in the section <Method for Producing Sulfide-based Solid Electrolyte Powder>, the present production apparatus 200 may include a reheating portion (not shown) that reheats the sulfide-based solid electrolyte powder obtained by cooling in the gas spraying portion 26, and an aspect thereof is not particularly limited.

The present invention is not limited to the above-described embodiments, and various modifications can be adopted within the scope of the present invention. For example, the present invention is not limited to the above-described embodiments, and may be modified and improved as appropriate. In addition, the material, shape, size, number, arrangement place, and the like of each component in the above-described embodiments are optional as long as the present invention can be achieved, and are not limited.

As described above, the following matters are disclosed in the present description.
[1] A method for producing a sulfide-based solid electrolyte powder, the method including:
   heating and melting a sulfide-based solid electrolyte raw material in a furnace; and
   spraying a gas onto an obtained melt while discharging the melt from the furnace to cool, solidify, and powder the melt.
[2] The method for producing a sulfide-based solid electrolyte powder according to the [1], in which a spraying pressure of the gas is 0.2 MPa to 10 MPa.
[3] The method for producing a sulfide-based solid electrolyte powder according to the [1] or [2], including, after the gas is sprayed onto the melt, collecting the sulfide-based solid electrolyte powder in a sealed chamber without being exposed to an atmosphere.
[4] The method for producing a sulfide-based solid electrolyte powder according to any one of the [1] to [3], in which a dew point of the gas is less than -30°C.
[5] The method for producing a sulfide-based solid electrolyte powder according to any one of the [1] to [4], in which an oxygen concentration of the gas is less than 100 ppm by volume.
[6] The method for producing a sulfide-based solid electrolyte powder according to any one of the [1] to [5], in which the sulfide-based solid electrolyte raw material is heated and melted at 600°C or higher and lower than 900°C.
[7] The method for producing a sulfide-based solid electrolyte powder according to any one of the [1] to [6], in which the sulfide-based solid electrolyte raw material is heated and melted in a gas atmosphere containing a sulfur element.
[8] The method for producing a sulfide-based solid electrolyte powder according to the [7], in which the gas atmosphere containing the sulfur element is obtained by supplying a sulfur source to the sulfide-based solid electrolyte raw material or the melt.
[9] The method for producing a sulfide-based solid electrolyte powder according to the [7] or [8], in which the gas atmosphere containing the sulfur element is obtained by introducing a sulfur vapor into the furnace.
[10] The method for producing a sulfide-based solid electrolyte powder according to any one of the [1] to [9], the method including continuously supplying the sulfide-based solid electrolyte raw material to the furnace and continuously discharging the melt from the furnace.
[11] The method for producing a sulfide-based solid electrolyte powder according to any one of the [1] to [10], in which the sulfide-based solid electrolyte powder contains a sulfur element and a halogen element.
[12] An apparatus for producing a sulfide-based solid electrolyte powder, the apparatus including:
   a furnace;
   a heating portion configured to heat the furnace;
   a discharge portion configured to discharge, from the furnace, a melt obtained by heating and melting a sulfide-based solid electrolyte raw material in the furnace; and
   a gas spraying portion configured to spray a gas to the melt discharged from the discharge portion to perform cooling, solidification, and powderization.
[13] The apparatus for producing a sulfide-based solid electrolyte powder according to the [12], the apparatus further including a sealed chamber, in which the gas spraying portion is provided in the sealed chamber.
[14] The apparatus for producing a sulfide-based solid electrolyte powder according to the [12] or [13], the apparatus including a sulfur supply portion configured to supply a sulfur source or a sulfur vapor to the furnace.
[15] The apparatus for producing a sulfide-based solid electrolyte powder according to any one of the [12] to [14], the apparatus including a raw material supply portion configured to supply the sulfide-based solid electrolyte raw material to the furnace, in which the raw material supply portion continuously supplies the sulfide-based solid electrolyte raw material into the furnace.
[16] The apparatus for producing a sulfide-based solid electrolyte powder according to any one of the [12] to [15], the apparatus including a raw material supply portion configured to supply the sulfide-based solid electrolyte raw material to the furnace, in which the raw material supply portion quantitatively supplies the sulfide-based solid electrolyte raw material into the furnace.
[17] The apparatus for producing a sulfide-based solid electrolyte powder according to any one of the [12] to [16], in which the discharge portion continuously discharges the melt obtained by heating and melting the sulfide-based solid electrolyte raw material in the furnace.
[18] The apparatus for producing a sulfide-based solid electrolyte powder according to any one of the [12] to [17], the apparatus including a reheating portion configured to reheat the sulfide-based solid electrolyte powder obtained by being cooled in the gas spraying portion.

### EXAMPLES

Hereinafter, the present invention is described in detail with reference to Examples, but the present invention is not limited thereto. Example 1 is inventive example of the present production method, and Example 2 is comparative example.

### Example 1

### 1. Intermediate Synthesis Step

Raw material powders of Li₂S, P₂S₅, and LiCl were mixed in a molar ratio of 1.9:0.5:1.6. A mixture of these raw material powders was placed in a heat-resistant container, placed in a heating furnace with the container, and heat-treated by holding the mixture for 0.5 hours under conditions of a nitrogen atmosphere having a dew point of -50°C, a pressure of 1 atmosphere, and a temperature of 300°C (temperature increasing rate of 5°C/min), to obtain an intermediate.

### 2. Heating and Melting Step

The obtained intermediate and 10 wt% of elemental sulfur powder were placed in the heat-resistant container and heated for 0.5 hours under a condition of 730°C. A nitrogen gas was flowed inside the heating furnace, and the dew point was set to -50°C.

### 3. Step of Cooling, Solidifying, and Powdering by Gas Spraying

After the heating and melting, the melt was discharged from a discharge nozzle, subjected to a rapid cooling, solidification, and powderization treatment at a gas spraying pressure of 0.9 MPa, and discharged into a sealed chamber maintained at a dew point of -50°C or lower and an oxygen concentration of less than 100 ppm by volume, to obtain a sulfide-based solid electrolyte powder.

### 4. Analysis

The obtained sulfide-based solid electrolyte powder was subjected to ICP measurement using an ICP emission spectrophotometric analyzer (Agilent 5800, manufactured by Agilent Technologies). Specifically, 10 mL of 0.1% NaOH solution was added to the obtained powder, and after applying ultrasonic waves, a sample was heated with a WB to dissolve, ultrapure water was added, the solution was heated again with 2 mL of H₂O₂ and 20 mL of HCl (1 + 1), and a volume of the solution was adjusted to 25 mL, whereby each element was quantified by ICP emission spectrography. As a result, no metal component impurities were detected in the powder, confirming that no contamination had occurred.

### Example 2

### 1. Intermediate Synthesis Step

Intermediate synthesis was performed in the same manner as in Example 1.

### 2. Heating and Melting Step

Heating and melting was performed in the same manner as in Example 1.

### 3. Cooling Step

After the heating and melting step, the melt was discharged from the discharge nozzle and poured into a cooled metal container and cooled to obtain a sulfide electrolyte solid.

### 4. Pulverization Step

The obtained sulfide electrolyte solid was pulverized to obtain a sulfide-based solid electrolyte powder.

### 5. Analysis

The obtained sulfide-based solid electrolyte powder was subjected to ICP measurement in the same manner as in Example 1 using the ICP emission spectrophotometric analyzer (Agilent 5800, manufactured by Agilent Technologies). As a result, metal component impurities were detected in the powder, thereby confirming an occurrence of the contamination.

Although various embodiments have been described above with reference to the drawings, it is needless to say that the present invention is not limited to such examples. It is obvious for a person skilled in the art that various modifications and variations can be made within the category described in the scope of claims and it is understood that such modifications and variations naturally belong to the technical scope of the present invention. Further, the components described in the above embodiment may be combined in any manner without departing from the spirit of the invention.

Note that, the present application is based on a Japanese Patent Application (No. 2022-079717) filed on May 13, 2022, contents of which are incorporated herein by reference.

### REFERENCE SIGNS LIST

10 furnace
11 melt
12 sulfide-based solid electrolyte raw material
13 discharge portion
14 melt outlet portion
15 sealed chamber
16 gas spraying portion
17 gas
200 apparatus for producing sulfide-based solid electrolyte powder
20 furnace
21 raw material supply portion
22 sulfur supply portion
23 discharge portion
24 melt outlet portion
25 sealed chamber
26 gas spraying portion

## Claims

1. A method for producing a sulfide-based solid electrolyte powder, the method comprising:
heating and melting a sulfide-based solid electrolyte raw material in a furnace; and
spraying a gas onto an obtained melt while discharging the melt from the furnace to cool, solidify, and powder the melt.

2. The method for producing a sulfide-based solid electrolyte powder according to claim 1, wherein a spraying pressure of the gas is 0.2 MPa to 10 MPa.

3. The method for producing a sulfide-based solid electrolyte powder according to claim 1 or 2, comprising, after the gas is sprayed onto the melt, collecting the sulfide-based solid electrolyte powder in a sealed chamber without being exposed to an atmosphere.

4. The method for producing a sulfide-based solid electrolyte powder according to claim 1 or 2, wherein a dew point of the gas is less than -30°C.

5. The method for producing a sulfide-based solid electrolyte powder according to claim 1 or 2, wherein an oxygen concentration of the gas is less than 100 ppm by volume.

6. The method for producing a sulfide-based solid electrolyte powder according to claim 1 or 2, wherein the sulfide-based solid electrolyte raw material is heated and melted at 600°C or higher and lower than 900°C.

7. The method for producing a sulfide-based solid electrolyte powder according to claim 1 or 2, wherein the sulfide-based solid electrolyte raw material is heated and melted in a gas atmosphere containing a sulfur element.

8. The method for producing a sulfide-based solid electrolyte powder according to claim 7, wherein the gas atmosphere containing the sulfur element is obtained by supplying a sulfur source to the sulfide-based solid electrolyte raw material or the melt.

9. The method for producing a sulfide-based solid electrolyte powder according to claim 7, wherein the gas atmosphere containing the sulfur element is obtained by introducing a sulfur vapor into the furnace.

10. The method for producing a sulfide-based solid electrolyte powder according to claim 1 or 2, the method comprising continuously supplying the sulfide-based solid electrolyte raw material to the furnace and continuously discharging the melt from the furnace.

11. The method for producing a sulfide-based solid electrolyte powder according to claim 1 or 2, wherein the sulfide-based solid electrolyte powder comprises a sulfur element and a halogen element.

12. An apparatus for producing a sulfide-based solid electrolyte powder, the apparatus comprising:
a furnace;
a heating portion configured to heat the furnace;
a discharge portion configured to discharge, from the furnace, a melt obtained by heating and melting a sulfide-based solid electrolyte raw material in the furnace; and
a gas spraying portion configured to spray a gas to the melt discharged from the discharge portion to perform cooling, solidification, and powderization.

13. The apparatus for producing a sulfide-based solid electrolyte powder according to claim 12, the apparatus further comprising a sealed chamber, wherein the gas spraying portion is provided in the sealed chamber.

14. The apparatus for producing a sulfide-based solid electrolyte powder according to claim 12 or 13, the apparatus comprising a sulfur supply portion configured to supply a sulfur source or a sulfur vapor to the furnace.

15. The apparatus for producing a sulfide-based solid electrolyte powder according to claim 12 or 13, the apparatus comprising a raw material supply portion configured to supply the sulfide-based solid electrolyte raw material to the furnace, wherein the raw material supply portion continuously supplies the sulfide-based solid electrolyte raw material into the furnace.

16. The apparatus for producing a sulfide-based solid electrolyte powder according to claim 12 or 13, the apparatus comprising a raw material supply portion configured to supply the sulfide-based solid electrolyte raw material to the furnace, wherein the raw material supply portion quantitatively supplies the sulfide-based solid electrolyte raw material into the furnace.

17. The apparatus for producing a sulfide-based solid electrolyte powder according to claim 12 or 13, wherein the discharge portion continuously discharges the melt obtained by heating and melting the sulfide-based solid electrolyte raw material in the furnace.

18. The apparatus for producing a sulfide-based solid electrolyte powder according to claim 12 or 13, the apparatus comprising a reheating portion configured to reheat the sulfide-based solid electrolyte powder obtained by being cooled in the gas spraying portion.
